# EUROPÄISCHE PATENTSCHRIFT

(11) **EP 2 106 412 B1**
(45) Veröffentlichungstag und Bekanntmachung des Hinweises auf die Patenterteilung: **30.06.2010**
(21) Anmeldenummer: 07857048.8
(22) Anmeldetag: 21.12.2007
(51) Int. Cl.: C08F 222/08, C08F 222/10, C08F 222/40, C08F 8/12, C08F 8/14, C08L 35/06, C09D 135/06

(54) **POLYMERMISCHUNG UMFASSEND EIN KAMMCOPOLYMERES**
POLYMER MIXTURE COMPRISING A COMB COPOLYMER
MÉLANGE POLYMÈRE CONTENANT UN COPOLYMÈRE EN PEIGNE

(30) Priorität: 27.12.2006 DE 102006062440
(43) Veröffentlichungstag der Anmeldung: 07.10.2009
(73) Patentinhaber: BYK-Chemie GmbH, 46483 Wesel (DE)
(72) Erfinder: GÖBELT, Bernd, 46487 Wesel (DE); OMEIS, Jürgen, 46286 Dorsten-Lembeck (DE)
(74) Vertreter: Kutzenberger, Helga
(86) Internationale Anmeldenummer: PCT/EP2007/011330
(87) Internationale Veröffentlichungsnummer: WO 2008/080581

(56) Entgegenhaltungen:
- EP-A- 0 945 501
- WO-A-2004/046251
- WO-A-2005/033151
- US-A- 5 612 396

## Beschreibung

Die vorliegende Erfindung betrifft eine Polymermischung aus wenigstens einem Kammcopolymeren I enthaltend Blöcke aus speziellen Struktureinheiten gemäß Anspruch 1 und wenigstens ein Copolymerisat II umfassen polymerisierte ggf. substituierte Styrrol- und Maleinsäureanhydrid-Einheiten, dessen Carboxylgruppen zumindest teilweise als Alkalimetal-, Erdalkalimetal- oder Ammoniumsalze vorliegen, sowie die Verwendung dieser Polymermischungen als Netz- und Dispergiermittel.

Es ist bekannt, dass eine Vielzahl von Kammcopolymeren als Netz- und Dispergiermittel für Feststoffe, insbesondere Pigmente, verwendet werden können. So sind aus dem Stand der Technik bereits Kammcopolymere bekannt, die durch Umsetzung von Styrrol/Maleinsäureanhydridcopolymeren (SMA-Harze) als Hauptkette mit Polyalkylenoxidaminen und Polyalkylenglykolen als Seitenketten erhalten werden.

Beispielsweise werden in dem US-Patent US 6,310,143 entsprechend hergestellte Kammcopolymere beschrieben, die neben Imidstrukturen, Amid- und Ester-Verknüfungen der Seitenketten mit der Hauptkette aufweisen. Solche Kammcopolymere gewährleisten als Dispergier- und Netzmittel für einige Einsatzzwecke keine genügend große Viskositätsreduzierung, wodurch keine ausreichend fließfähige Pigmentpasten formulierbar bzw. keine Pigmentpasten mit einem gewünschten hohen Pigmentgehalt herstellbar sind.

Gegenüber diesem Stand der Technik bestand daher ein Bedarf, Kammcopolymere auf Basis der bekannten Styrrol-/Maleinsäureanhydridcopolymerisate so zu modifizieren, dass durch deren Einsatz als Netz- und Dispergiermittel Feststoffpasten, vorzugsweise Pigmentpasten, mit einer sehr guten Fließfähigkeit trotz hohen Feststoffgehalt erzielbar sind.

Die Aufgabe wird durch das zur Verfügungstellen der erfindungsgemäßen Polymermischungen gelöst, die
I. wenigstens ein Kammcopolymeres enthaltend
   a) wenigstens einen Block eines Copolymeren aus den nachfolgenden Struktureinheiten I bis IV, wobei X₁ für NH steht, und/oder
   b) wenigstens einen Block eines Copolymeren aus den nachfolgenden Struktureinheiten I, II und IV, wobei X₁ für 0 steht, und/oder
   c) wenigstens einen Block eines Copolymeren aus den nachfolgenden Struktureinheiten I bis IV, wobei X₁ für NH oder 0 steht
      und/oder
   d) wenigstens einen Block eines Copolymeren aus der Struktureinheit I und polymerisierten Einheiten von wenigstens einem ethylenisch ungesättigten Monomeren, das verschieden von der Struktureinheiten II bis IV ist,
   wobei der Block d) nur mit einem der Blöcke a) - c) zu einem Blockcopolymeren kombiniert ist und
   wobei die Struktureinheiten I bis IV für 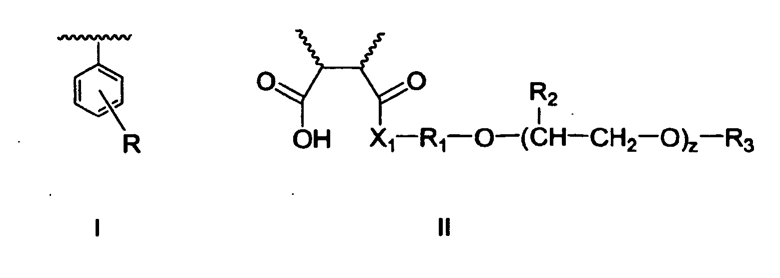 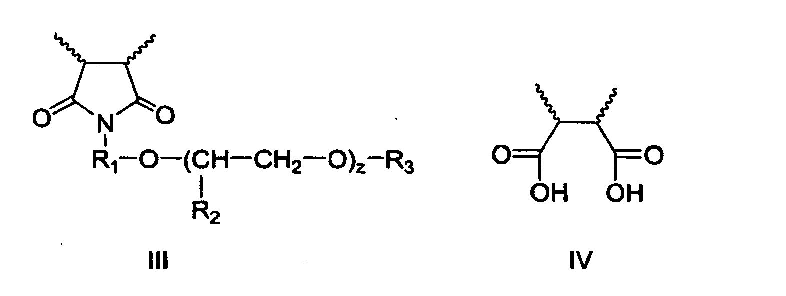 stehen, in denen 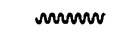 für die Kettenverknüpfung,
   - R: für H, Halogen, vorzugsweise Chlor, eine Nitrogruppe, eine Alkylgruppe mit 1 bis 15 C-Atomen oder eine Arylgruppe mit 6 bis 18 C-Atomen,
   - R₁: für eine Alkylengruppe mit 1 bis 24 C-Atomen oder eine substituierte oder unsubstituierte Arylengruppe mit 6 bis 18 C- Atomen,
   - R₂: für H und/oder eine Alkylgruppe,
   - z: für eine ganze Zahl von 3 bis 70,
   - X₁: für NH und/oder O,
   - R₃: für eine ggf. substituierte Alkylgruppe mit 1 bis 30 C-Atomen, die einfach oder mehrfach ungesättigt sein kann, eine ggf. substituierte Arylgruppe mit von 6 bis 18 C-Atomen, eine ggf. substituierte Cycloalkylgruppe mit 4 bis 10 C-Atomen,
   stehen und die freien Carboxylgruppen der Struktureinheit IV als Alkalimetall-, Erdalkalimetal- oder Ammoniumsalze vorliegen können,
   und
II. wenigstens ein Copolymeres basierend auf der Struktureinheit I und der Struktureinheit IV, dessen Carboxylgruppen zumindest teilsweise als Erdalkalimetal-, Ammonium- oder Alkalimetalsalze vorliegen, umfassen.

Vorzugsweise sind in den Struktureinheiten I bis IV
- R =: H
- R₁ =: eine Alkylengruppe mit 1 bis 6 C-Atomen
- R₂=: für H und/oder CH₃, wobei das Molverhältnis der Ethylenoxideinheiten zu den Propyleneinheiten in der Struktureinheit II und in der Struktureinheit III 0:100 bis 100:0 beträgt
- R₃ =: eine Alkylgruppe mit 1 bis 8 C-Atomen und eine ggf. substituierte Arylgruppe mit 6 C-Atomen
- X₁ =: NH und/oder O
- Z =: eine ganze Zahl von 5 bis 60

Besonders bevorzugt steht in den Struktureinheiten 1 bis IV
- R=: H
- R₁ =: einen Ethylen-, Propylen- und/oder Isopropylen-Rest
- R₂ =: für H oder einen CH₃-Rest, wobei das Molverhältnis der Ethylenoxideinheiten zu den Propylenoxideinheiten 70:30 bis 30:70 beträgt
- R₃ =: für eine CH₃- oder C₂H₉-Rest
- z =: eine ganze Zahl von 27 bis 50 und
- R₁: für NH und/oder O steht.

Die erfindungsgemäße Polymermischung besteht vorzugsweise aus wenigstens einem Kammcopolymeren I und wenigstens einem Copolymeren II. Vorzugsweise liegt das Gewichtsverhältnis der Kammcopolymeren I zu dem Copolymeren II im Bereich von 50:50 bis 95:5.

Das Kammcopolymer I ist beispielsweise erhältlich durch Umsetzung von einem ggf. substituierten Styrol/Maleinsäureanhydridcopolymerisat
a1) mit wenigstens einem eine primäre Aminoendgruppe aufweisenden Polyalkylenoxidmonoamin vorzugsweise bei Reaktionstemperaturen ≥ 150°C und ggf. einer weiteren Umsetzung bei Reaktionstemperaturen < 100°C
   oder
a2) mit einer Mischung aus wenigstens einem eine primäre Aminoendgruppe aufweisenden Polyalkylenoxidmonoamin und wenigstens einem monohydroxyterminierten Polyalkylenoxid vorzugsweise bei Reaktionstemperatur ≥ 150°C und ggf. einer weiteren Umsetzung bei Reaktionstemperatur < 100°C
   oder
a3) mit wenigstens einem monohydroxyterminierten Polyalkylenoxid vorzugsweise in Gegenwart eines üblichen Veresterungskatalysator, wie zum Beispiel einer Sulfonsäure,
   oder
   durch Umsetzung wenigstens eines Copolymeren mit einer AB-Blockcopolymerstruktur, dessen A-Block aus ggf. substituierten Styrol-Einheiten und wenigstens einem copolymerisierten, ethylenisch ungesättigten Monomeren ausgewählt aus der Gruppe umfassend (Meth)acrylate und Dialkylmaleinate und dessen B-Block aus ggf. substituierten Styrol-Einheiten und copolymerisierten Maleinsäureanhydrid-Einheiten besteht, mit a1), a2) oder a3).

Erfindungsgemäß wird wenigstens ein Kammcopolymer I mit der zweiten Mischungskomponente gemischt, wobei das Copolymere II von wenigstens einem SMA-Harz aus ggf. substituierten Styrol-Einheiten und copolymerisierte Maleinsäureanhydrid-Einheiten durch deren Hydrolyse und Versalzung erhältlich ist. Bei dem Copolymeren II liegen die freien Carboxylgruppen zumindest teilweise als Erdalkalimetal-, Ammonium- oder als Alkalimetalsalze vor.

Die bei der Herstellung der Kammcopolymeren I bzw. der Copolymeren II zum Einsatz kommende SMA-Harze sind ggf. substituierte Styrol-MaleinsäureanhydridCopolymerisate, wobei das Styrol gegebenenfalls mit Alkylgruppen mit 1 bis 15 C-Atomen, vorzugsweise mit Methyl, mit Arylgruppen mit 6 bis 18 C-Atomen, Halogen, vorzugsweise Chlor, oder wenigstens einer Nitrogruppe substituiert sein kann.

Erfindungsgemäß wird daher unter dem "S" des Begriffs SMA-Harz sowohl ein substituiertes als auch ein unsubstituiertes Styrol verstanden.

Die SMA-Harze können einen statistischen, alternierenden, gradientenartigen oder blockartigen Aufbau besitzen. Sie können durch radikalisch initiierte Polymerisationen zum Beispiel mit Azo- oder Peroxidinitiatoren hergestellt werden. Um das gewünschte Molekulargewicht einzustellen, können Kettenregler wie zum Beispiel Thiole, sekundäre Alkohole oder Alkylhalogenide wie Tetrachlorkohlenstoff während der Polymerisation zugegeben werden. Weitere geeignete Herstellungsverfahren für SMA-Harze sind kontrollierte radikalische Polymerisationsverfahren wie zum Beispiel:
- der "Reversible Addition Fragmentation Chain Transfer Process" (RAFT), der bei Verwendung bestimmter Polymerisationsregler auch "MADIX" und "Addition Fragmentation Chain Transfer" genannt und hier nur als RAFT bezeichnet wird, wie beispielsweise in Polym. Int. 2000, 49, 993, Aust. J. Chem 2005, 58, 379, J. Polym. Sci. Part A: Polym. Chem. 2005, 43, 5347, US 6 291 620, WO 98/01478, WO 98/58974 und WO 99131144 offenbart ist, oder
- die kontrollierte Polymerisation mit Nitrooxylverbindungen als Polymerisationsregler (NMP), wie beispielsweise in Chem. Rev. 2001, 101, 3661 offenbart ist.

Besonders bevorzugt ist als Polymerisationstechnologie das C-RAFT-Verfahren, dass in US 6 291 620 beschrieben wird. Die entsprechenden, aufgeführten Offenbarungen gelten als Teil der vorliegenden Offenbarung.

Vorzugsweise liegt das ggf. substituierte Styrol-Maleinsäureanhydrid-Molverhältnis der SMA-Harze bei 1:1 bis 8:1. Besonders bevorzugt ist ein ggf. substituiertes Styrol-Maleinsäureanhydrid-Molverhältnis von 1:1 bis 2:1, um eine hohe Dichte an Seitenketten zu realisieren. Das zahlengemittelte Molekulargewicht der verwendeten SMA-Harze liegt vorzugsweise zwischen 1000 g/mol und 20 000 g/mol (bestimmt mit GPC).

Als Polyalkylenoxidmonoamine zur Herstellung der erfindungsgemäß zum Einsatz kommende Kammcopolymeren I werden vorzugsweise C₁-C₄-Monoalkohol gestartete Polyether, die aus Ethylenoxid- und Propylenoxid-Einheiten aufgebaut sind und eine primäre Aminogruppe als Endgruppe tragen, verwendet. Das Gewichtsverhältnis von Ethylenoxid- zu Propylenoxid-Einheiten sollte vorzugsweise zwischen 0:100 und 100:0, besonders bevorzugt zwischen 30:70 und 70:30, liegen. Das zahlengemittelte Molekulargewicht der zum Einsatz kommenden Polyalkylenoxidmonoamine liegt vorzugsweise zwischen 500 g/mol und 3000 g/mol (bestimmt über Aminzahl oder ¹H-NMR-Spektroskopie).

Die zur Umsetzung a2) bzw. a3) verwendeten monohydroxyterminierten Polyether sind vorzugsweise Polyalkylenoxide. Das Gewichtsverhältnis von Ethylenoxid- zu Propylenoxid-Einheiten der monohydroxyterminierten Polyether liegt vorzugsweise zwischen 0:100 und 100:0, besonders bevorzugt zwischen 30:70 und 70:30. Das zahlengemittelte Molekulargewicht liegt zwischen 200 g/mol und 3000 g/mol (gemessen durch ¹H-NMR-Spektroskopie).

Als Kammcopolymeres I kann erfindungsgemäß auch ein AB-Blockcopolymer eingesetzt werden, dessen A-Block aus ggf. substituierten Styrol-Einheiten und wenigstens einem copolymerisierten ethylenisch ungesättigten Monomeren ausgewählt aus der Gruppe umfassen (Meth)acrylate und Dialkylmaleinate aufgebaut ist und dessen B-Block aus einer Kombination der Strukturelemente I, II und IV oder aus einer Kombination der Strukturelemente I bis IV aufgebaut ist, wobei X₁ = O und/oder NH ist.

Beispiele für Aryl- oder Alkyl-(Meth)Acrylate sind Alkyl(meth)acrylate von geradkettigen, verzweigten oder cycloaliphatischen Alkoholen mit 1 bis 22 Kohlenstoffatomen, wie z. B. Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Cyclohexyl(meth)acrylat, Isobomyl(meth)acrylat und t-Butyl(meth)acrylat; Aryl(meth)acrylate wie Benzylmethacrylat, oder Phenylacrylat, wobei die Arylreste jeweils unsubstituiert oder bis zu vierfach substituiert sein können wie zum Beispiel 4-Nitrophenylmethacrylat.

Das Gewichtsverhältnis der A- zu den B-Blöcken liegt vorzugsweise im Bereich von 95:5 bis 5:95, besonders bevorzugt von 90:10 bis 10:90.

Die Maleinsäurehalbester (Strukturelement II) sind vorzugsweise Umsetzungsprodukte von Maleinsäureanhydrid mit monohydroxyterminierten Polyethern, vorzugsweise monohydroxyterminierte Polyalkylenoxiden, wie sie bereits vorstehend beschrieben sind.

Sie können als solche zur Polymerisation eingesetzt werden und/oder in situ während der Polymerisation durch Reaktion des polymerisierenden Maleinsäureanhydrids mit einem vorstehend genannten Polyether und/oder durch Umsetzung des SMA-Harzes mit einem vorstehend genannten Polyether nach der Polymerisation erzeugt werden.

In einer bevorzugten Ausführung sind die erfindungsgemäß zum Einsatz kommenden Kammcopolymere I vorzugsweise dadurch erhältlich, dass zunächst wenigstens ein SMA-Harz in einem geeigneten Lösungsmittel angelöst wird. Hierzu wird wenigstens ein Polyalkylenoxidmonoamin oder eine Mischung aus wenigstens einem Polyalkylenoxidmonoamin und wenigstens einem der vorstehend beschriebenen monohydroxyterminierten Polyether oder nur wenigstens ein monohydroxyterminierter Polyether zugegeben und vorzugsweise bei Temperaturen von 20°C bis 200°C, besonders bevorzugt 30°C bis 170°C, ganz besonders bevorzugt bei Temperaturen ≥ 150°C, soweit umsetzt, dass vorzugsweise mindestens 50% der Anhydridstrukturen des die jeweilige Hauptkette bildende Copolymerisats umgesetzt werden. Hierbei reagieren die primären Aminogruppen mit den Anhydridstrukturen des Copolymerisats zu Amiden und/oder Imiden, wobei bei niedrigen Reaktionstemperaturen die Amidbildung und mit steigender Reaktionstemperatur die Imidbildung begünstigt wird, oder die Hydroxylgruppe mit den Anhydridstrukturen zu Halbestem. Bei Reaktionstemperaturen von 20°C bis 50°C werden fast ausschließlich Amidverknüpfungen gebildet, während bei Temperaturen über 140°C die Imidbildung favorisiert wird. Da bei der Imidbildung Wasser freigesetzt wird, können weitere Anhydridstrukturen der Copolymerisate zu Carbonsäurefunktionen umgesetzt werden. Bei jeder dieser Umsetzungen kann das anfänglich zugegebene Lösungsmittel wieder abdestilliert werden, um ggf. auch das durch die Imidbildung anfallende Wasser durch azeotrope Destillation zu entfernen.

Die Mitverwendung eines Lösungsmittels bei der Umsetzung des Copolymerisats mit der Aminkomponente und/oder den monohydroxyterminierten Komponenten gewährleistet, dass sämtliche Anhydridgruppen der Copolymerisate weitgehend gleichwertig bereits ab Beginn der Umsetzung reagieren können. Dadurch wird ein homogeneres Produkt erhalten.

Erfindungsgemäß wird unter einem Kammcopolymeren bzw. einem Kammblockcopolymeren ein Polymeres verstanden, dessen Copolymeres bzw. Blockcopolymeres als Basispolymeres oder polymere Hauptkette über Ester-, Amid- und/oder Imid-Bindungen mit linearen, polymeren Seitenketten verbunden ist.

Die 2. Mischungskomponente der efindungsgemäßen Polymermischung ist ein SMA-Harz. Dieses SMA-Harz hat vorzugsweise eine alternierenden, gradientenartigen oder blockartigen Aufbau, wobei das Molverhältnis von ggf. substituierten Styrrol zu Maleinsäureanhydrid bei 1:1 bis 8:1, vorzugsweise bei 1:1 bis 2:1 liegt. Die Anhydridgruppen des SMA-Harzes sind vorzugsweise zu 100% hydrolysiert und die freien Carboxylgruppen vorzugsweise zu 100% versalzt. Zur Versalzung können die vorstehend aufgeführten mit primären Aminogruppen terminierten Polyalkylenoxidmonoamine und ggf. substituierte Monoaminverbindungen eingesetzt werden, wie zum Beispiel N,N-Dimethylethanolamin, N,N-Diethylethanolamin, N,N-Dibutylethanolamin, Methyldiethanolamin, Ethyldiethanolamin oder Triethanolamin.

Die Versalzung kann auch durch Zugabe von geeigneten Alkalimetalsalzen oder Erdalkalimetalsalzen erfolgen.

Die erfindungsgemäßen Polymermischungen eignen sich als Netz- und Dispergiermittel für viele aus dem Stand der Technik bekannten wasserbasierenden Einsatzzwecke. So können diese z. B. bei der Herstellung oder Verarbeitung von Lacken, Druckfarben, Tinten für inkjet-Verfahren wie für Tintenstrahldrucker, Papierstrich, Leder- und Textilfarben, Pasten, Pigmentkonzentraten, Keramiken, kosmetischen Zubereitungen eingesetzt werden, vorzugsweise immer dann, wenn Feststoffe wie Pigmente und/oder Füllstoffe vorhanden sind. Beispielsweise lassen sich die erfindungsgemäßen Polymermischungen bei der Herstellung von Industrielacken, Holz- und Möbellacken, Fahrzeuglacken, Schiffsfarben, Korrosionsschutzfarben, Can- und Coil-Coatings, Maler- und Bautenlacken verwenden, wobei ggf. übliche Hilfsstoffe wie bekannte Bindemittel und/oder Lösungsmittel, Pigmente und gegebenenfalls Füllstoffe, den erfindungsgemäßen Polymermischungen zugemischt werden.

Beispiele für übliche Bindemittel sind Harze auf Basis von Polyurethanen, Cellulosenitraten, Celluloseacetobutyraten, Alkyden, Melamin, Polyester, Chlorkautschuk, Epoxiden und Acrylaten.

Als Netz- und Dispergiermittel eigenen sich die erfindungsgemäßen Polymermischungen auch für die Herstellung von Beschichtungen auf Wasserbasis, wie kathodischen oder anodischen Elektrotauchlackierungen beispielsweise für Automobilkarossen. Weitere Beispiele für einen Einsatz als Dispergiermittel sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die erfindungsgemäßen einem Polymermischungen eignen sich insbesondere auch zur Herstellung von Feststoffkonzentraten, vorzugsweise von Pigmentkonzentraten. Dazu werden diese in einem Trägermedium wie in organischem Lösungsmitteln, Weichmachern und/oder Wasser, vorgelegt und die zu dispergierenden Feststoffe unter Rühren zugegeben. Zusätzlich können diese Konzentrate Bindemittel und/oder andere Hilfsstoffe enthalten. Mit den erfindungsgemäßen Polymermischungen ist aber auch in vorteilhafter Weise möglich, stabile bindemittelfreie Pigmentkonzentrate herzustellen. Ebenso ist es möglich, mit den erfindungsgemäßen Polymermischungen fließfähige Pigmentkonzentrate aus Pigmentpresskuchen herzustellen. Hierbei wird dem Presskuchen, der noch Wasser enthalten kann, eine erfindungsgemäße Polymermischung zugemischt und die so erhaltene Mischung dispergiert. Solche Feststoffkonzentrate, vorzugsweise Pigmentkonzentrate, können dann in unterschiedliche Substrate wie z. B. Alkydharze, Polyesterharze, Acrylatharze, Polyurethanharze oder Epoxidharze eingearbeitet werden. Pigmente, die lösungsmittelfrei direkt in der erfindungsgemäße Polymermischungen dispergiert sind, eignen sich besonders zur Pigmentierung von thermoplastischen und duroplastischen Kunststoffformulierungen.

Die erfindungsgemäßen Polymermischungen können vorteilhaft auch bei der Herstellung von Tinten für "non impact"-Druckverfahren wie "thermal inkjet" und dem "Bubblejet-Verfahren" verwendet werden. Diese Tinten können beispielsweise wässrige Tintenformulierungen sein.

Die erfindungsgemäßen Polymermischungen können auch bei der Herstellung kosmetischer Zubereitungen wie zur Herstellung von Make-up, Puder, Lippenstiften, Haarfärbemitteln, Cremen, Nagellacken und Sonnenschutzpräparaten verwendet werden. Diese können in den üblichen Formulierungen wie als W/O- oder O/W-Emulsionen, Lösungen, Gele, Cremes, Lotionen oder Sprays, vorliegen. Die erfindungsgemäßen Polymermischungen können dabei in den zur Herstellung dieser Zubereitungen verwendeten Dispersionen bereits als Dispersionsmittel eingesetzt werden.

Ein weiterer Gegenstand der vorliegenden Erfindung ist auch die Verwendung der erfindungsgemäßen Polymermischungen als Netz- und Dispergiermittel. Vorzugsweise werden diese Netz- und Dispergiermittel für die vorstehend beschriebenen Einsatzzwecke verwendet.

Ein weiterer Einsatzzweck ist auch die Herstellung eines pigmentierten Überzuges auf einem Substrat, wobei der Pigmentlack auf das Substrat aufgebracht, und der aufgebrachte Pigmentlack eingebrannt oder ausgehärtet bzw. vernetzt wird.

Für die Einsatzzwecke der erfindungsgemäßen Polymermischungen können diese ggf. zusammen mit nach dem Stand der Technik üblichen Bindemitteln eingesetzt werden.

Eine erfindungsgemäße Verwendung besteht u. a. auch in der Herstellung dispergierbarer, pulverpartikel- und/oder faserpartikel-förmiger Feststoffe, insbesondere in der Herstellung von dispergierbaren Pigmenten, wobei die Partikel mit einer erfindungsgemäßen Polymermischung beschichtet sein können. Derartige Beschichtungen von organischen oder anorganischen Feststoffen werden in bekannter Weise, wie sie z. B. in EP-A-0 270 126 beschrieben, ausgeführt. Hierbei kann das Lösungs- oder Emulsionsmittel entweder entfernt werden oder im Gemisch unter Bildung einer Paste verbleiben. Solche Pasten sind gängige Handelsprodukte, die ggf. Bindemittel sowie weitere Hilfs- und Zusatzstoffe enthalten können.

Speziell bei Pigmenten kann die Modifizierung, d. h. Beschichtung der Pigmentoberfläche durch Zusatz der erfindungsgemäßen Polymermischungen während oder nach der Synthese der Pigmente erfolgen, d. h. durch deren Zugabe zur Pigmentsuspension oder während bzw. nach dem Pigmentfinish.

Die auf diese Weise vorbehandelten Pigmente zeichnen sich durch eine leichtere Einarbeitbarkeit und durch eine höhere Farbstärke gegenüber nicht Oberflächen behandelten Pigmenten aus.

Die erfindungsgemäßen Polymermischungen eignen sich als Netz- und Dispergierungsmittel für eine Vielzahl von Pigmenten wie Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan-, Xanthen-, Acridin-, Chinacridon-, Methin-Pigmente, Anthrachinon-, Pyranthron-, Perylen- und andere polycyclische Carbonyl-Pigmente. Weitere Beispiele für erfindungsgemäß dispergierbare organische Pigmente finden sich in der Monographie: W. Herbst, K. Hunger "Industrial Organic Pigments", 1997 (Verlag: Wiley-VCH, ISBN: 3-527-28836-8). Beispiele für erfindungsgemäß dispergierbare, anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadlum, Molybdän, Cadmium, Titan, Zink, Mangan, Cobalt, Eisen, Chrom, Antimon, Magnesium, Aluminium (beispielsweise Nickeltitangelb, Bismut-vanadatmolybdatgelb oder Chromtitangelb). Weitere Beispiele sind in der Monographie: G. Buxbaum "Industrial Inorganic Pigments", 1998 (Verlag: Wiley-VCH, ISBN: 3-527-28878-3) genannt. Anorganische Pigmente können auch magnetische Pigmente auf Basis von Reineisen, Eisenoxiden und Chromoxiden oder Mischoxiden, Metalleffektpigmente aus Aluminium, Zink, Kupfer oder Messing sowie Perlglanzpigmente, fluoreszierende und phosphoreszierende Leuchtpigmente sein. Mit Hilfe der erfindungsgemäßen Polymermischungen können auch nanoskalige, organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel dispergiert werden, die aus gemischten Metall- und/oder Halbmetalloxiden bzw. -hydroxiden bestehen. Hierfür geeignete Oxide sind Oxide und/oder Oxidhydroxide des Aluminiums, Siliziums, Zinks, Titans, die zur Herstellung solch extrem feinteiligen Feststoffe eingesetzt werden können. Der Herstellprozess dieser oxidischen bzw. hydroxidischen bzw. oxidhydroxidischen Teilchen kann über verschiedene Verfahren z. B. Ionenaustauschprozesse, Plasmaprozesse, Sol-Gel-Verfahren, Ausfällung, Zerkleinerung (z. B. durch Vermahlung) oder Flammhydrolyse usw. erfolgen. Bei diesen nanoskaligen Feststoffen kann es sich auch um sogenannte Hybrid-Partikeln handeln, die aus einem anorganischen Kern und einer organischen Hülle oder umgekehrt aufgebaut sind.

Erfindungsgemäß dispergierbare, pulver- oder faser-förmige Füllstoffe sind u. a. solche, die aus pulver oder faser-förmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff aufgebaut sind. Weitere Beispiele für dispergierbare Pigmente oder Füllstoffe finden sich auch in der EP-A-0 270 126. Auch Mattierungsmittel wie z. B. Kieselsäuren lassen sich ebenfalls mit den erfindungsgemäßen Polymermischungen hervorragend dispergieren und stabilisieren.

Ein weiterer Gegenstand der vorliegenden Erfindung sind daher auch Lacke und Pasten enthaltend wenigstens eine erfindungsgemäße Polymermischung und wenigstens ein Pigment, Wasser und ggf. ein organisches Trägermedium, sowie gegebenenfalls Bindemittel und übliche Hilfsstoffe.

Ein weiterer Gegenstand der vorliegenden Erfindung sind daher auch die vorstehend genannten Pigmente beschichtet mit wenigstens einer erfindungsgemäßen Polymermischung.

### Beispiele:

### Herstellung der Ausgangsverbindungen

### a) Polyether-MSA-Halbester

375 g Pluriol A 750 E, 42 g Polyglycol B01/20, 55 g Maleinsäureanhydrid werden in Gegenwart von 2 g Dodecylbenzolsulfonsäure 3 h bei 135°C zur Reaktion gebracht.

### b) Herstellung des Kammcopolymers 1

10,5 g Pluriol P 600, 3,9 g 2,4-Diphenyl-4-methyl-1-penten werden auf 160°C erhitzt. Anschließend werden über einen Zeitraum von 2 h 8,7 g Styrol, 4,2 g Dibutylmaleinat, 8,7 g Benzylmethacylat und 0,2 g Trigonox C zugeleitet. Nach 1 h Nachreaktionszeit wird die Temperatur auf 135°C gesenkt und 170 g der nach a) erhaltenen Polyether-MSA-Halbester-Mischung hinzugegeben. Anschließend werden 34 g Styrol und 1,7 g Trigonox C über eine Zeitraum von 1 h hinzudosiert. Nach der Nachreaktion von 4 h wird die Reaktionsmischung auf Raumtemperatur abgekühlt.

### c) Herstellung des Kammcopolymers 2

20 g Kunstharz SMA 2000 in 60 g Butylacetat angelöst werden mit 116 g Jeffamin M 2070 4 h bei 160°C zur Reaktion gebracht. Hierbei wird das Butylacetat abdestilliert.

### Herstellung des Netz- und Dispergiermittels 1 (Vergleichsbeispiel)

100 g des Kammcopolymers 1 werden in 100 g Wasser emulgiert und mit N,N-Diethylaminoethanol auf einen pH von 9 eingestellt. Anschließend wird die Mischung 1 h auf 95°C erhitzt und auf einen Festkörpergehalt von 40 Gew% eingestellt.

### Herstellung des Netz- und Dispergiemittels 2 (erfindungsgemäße Mischung)

5 g Kunstharz SMA 2000 und 0,1 g p-Toluolsulfonsäure werden in 100 g Wasser emulgiert und bei 95°C 8 h zur Reaktion gebracht. Anschließend werden 100 g des Kammcopolymers 1 hinzugegeben und mit N,N-Diethylaminoethanol auf einen pH von 9 eingestellt. Durch Zugabe von Wasser wird auf ein Festkörpergehalt von 40 Gew% eingestellt.

### Herstellung des Netz- und Dispergiermittels 3 (Vergleichsbeispiel)

100 g des Kammcopolymers 2 werden in 150 g Wasser gelöst.

### Herstellung des Netz- und Dispergiermittels 4 (erfindungsgemäße Mischung)

5 g Kunstharz SMA 2000 und 0,1 g p-Toluolsulfonsäure werden in 100 g Wasser emulgiert und bei 95°C 8 h zur Reaktion gebracht. Anschließend werden 56 g des Kammcopolymers 2 hinzugefügt und anschließend mit 18 g Jeffamin M 2070 zur Versalzung versetzt. Durch Zugabe von Wasser wird auf einen Festkörpergehalt von 40 Gew% eingestellt.
- Pluriol A 750 E: Polyethylenglykolmonomethylether, Hydroxylzahl 75 gKOH/g, Hersteller BASF
- Polyglycol B01/20: Polypropylenglykolmonobutylether, Hydroxylzahl 80 gKOH/g, Hersteller Clariant
- Pluriol P 600: Polypropylenglycol, Hydroxylzahl 195 gKOH/g, Hersteller BASF
- Trigonox C: tert-Butylperoxobenzoat, Hersteller Akzo Nobel
- Kunstharz SMA 2000: Styrol-Maleinsäureanhydrid-Copolymer, Hersteller Cray Valley
- Jeffamin M 2070: aminterminierter EO/PO-Polyether, Hersteller Huntsman

### Anwendungtechnische Beispiele:

I.

| Pigmentkonzentration | Gew% |
|---|---|
| Wasser | 27,00 |
| Netz- und Dispergiermittel 1 - 4 | 22,50 |
| BYK®-017 | 0,5 |
| Hostaperm Rotviolett ER02 | 30,00 |
| Wasser | 20,00 |
| | 100,0 |

Dispergierung: 40 min bei 40°C und 10000 U/min, Dispermat CV
II.

| Auflackung | Gew% |
|---|---|
| Pigmentkonzentrat gemäß I. | 20,00 |
| Basecoat Sikkens Autowave MM | 80,00 |
| | 100,00 |

Homogenisierung: 5 min rütteln
- BYK®-017: Entschäumer, Hersteller Byk Chemie GmbH
- Basecoat Sikkens Autowave MM: unpigmentierter Autoreperatur-Basislack, wasserbasierende Acrylatdispersion, Hersteller Akzo Nobel

### Ergebnisse:

| Netz- und Dispegiermittel | Pigmentkonzentration | | Auflackung | | |
|---|---|---|---|---|---|
| | Schaum | Viskosität | Transparenz | Stippen | Glanz R20 / R 60 |
| 1 | wenig | Fliessgrenze | 2 | keine | 24 / 63 |
| 2 | kein | fliessfähig | 2 | keine | 26 / 64 |
| 3 | wenig | Fliessgrenze | 3 | keine | 20 / 53 |
| 4 | kein | fliessfähig | 3 | keine | 26 / 70 |

### Beurteilungsskala:

1 gut
2 befriedigend
3 nicht befriedigend

Der Glanz wurde mit dem Meßgerät "haze-gloss° der Firma Byk Gardner bestimmt. Die Transparenz bzw. Stippen wurden visuell beurteilt. Hierbei wurde eine Skala von 1 - 5 verwendet (1=transparent; 5=nicht transparent).

## Patentansprüche

1. Eine Polymermischung umfassend
I. wenigstens ein Kammcopolymeres enthaltend
a) wenigstens einen Block eines Copolymeren aus den nachfolgenden Struktureinheiten I bis IV, wobei X₁ für NH steht, und/oder
b) wenigstens einen Block eines Copolymeren aus den nachfolgenden Struktureinheiten I, II und IV, wobei X₁ für 0 steht, und/oder
c) wenigstens einen Block eines Copolymeren aus den nachfolgenden Struktureinheiten I bis IV, wobei X₁ für NH oder 0 steht
und/oder
d) wenigstens einen Block eines Copolymeren aus der Struktureinheit I und polymerisierten Einheiten von wenigstens einem ethylenisch ungesättigten Monomeren, die verschieden sind von der Struktureinheiten II bis IV,
wobei ein Block d) nur mit einem der Blöcke a) - c) zu einem Blockcopolymeren kombiniert ist und
wobei die Struktureinheiten I bis IV für 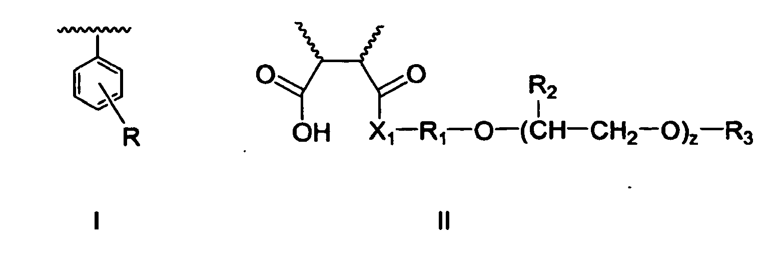 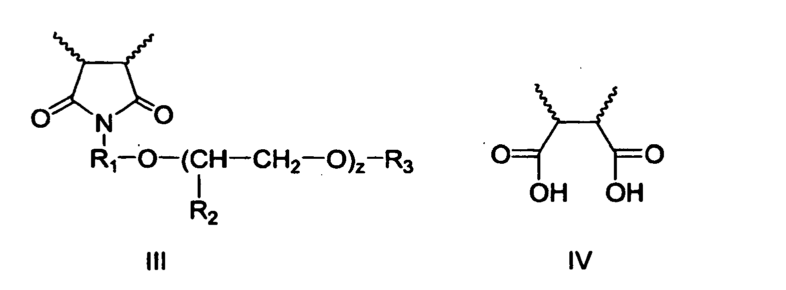 stehen, in denen 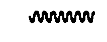
für die Kettenverknüpfung,
R für H, Halogen, vorzugsweise Chlor, eine Nitrogruppe, eine Alkylgruppe mit 1 bis 15 C-Atomen oder eine Arylgruppe mit 6 bis 18 C-Atomen,
R₁ für eine Alkylengruppe mit 1 bis 24 C-Atomen oder eine substituierte oder unsubstituierte Arylengruppe mit 6 bis 18 C- Atomen,
R₂ für H und/oder eine Alkylgruppe,
z für eine ganze Zahl von 3 bis 70,
X₁ für NH und/oder O,
R₃ für eine ggf. substituierte Alkylgruppe mit 1 bis 30 C-Atomen, die einfach oder mehrfach ungesättigt sein kann, eine ggf. substituierte Arylgruppe mit von 6 bis 18 C-Atomen, eine ggf. substituierte Cycloalkylgruppe mit 4 bis 10 C-Atomen,
stehen und die freien Carboxylgruppen der Struktureinheit IV als Alkalimetall-, Erdalkalimetal- oder Ammoniumsalze vorliegen können,
und
II. wenigstens ein Copolymeres basierend auf der Struktureinheit I und der Struktureinheit IV, dessen Carboxylgruppen zumindest teilsweise als Erdalkalimetal-, Ammonium- oder Alkalimetalsalze vorliegen.

2. Eine Polymermischung nach Anspruch 1, **dadurch gekennzeichnet, dass** in den Struktureinheiten I bis IV
R H ist,
R₁ eine Alkylengruppe mit 1 bis 6 C-Atomen ist,
R₂ H oder CH₃ ist, wobei das Molverhältnis von Ethylenoxid-Einheiten zu Propylenoxid- Einheiten in der Struktureinheit II und der Struktureinheit III 0:100 bis 100:0 beträgt,
R₃ eine Alkylgruppe mit 1 bis 8 C-Atomen oder eine ggf. substituierte Arylgruppe mit 6 C-Atomen ist,
X₁ NH und/oder 0 ist
und
z eine ganze Zahl von 5 bis 60 ist.

3. Eine Polymermischung nach Anspruch 1, **dadurch gekennzeichnet, dass** in den Struktureinheiten I bis IV
R ist H,
R₁ ein Ethylen-, Propylen- und/oder Isopropylen-Rest,
R₂ H oder ein CH₃-Rest, wobei das Molverhältnis von Ethylenoxid-Einheiten zu Propylenoxid- Einheiten 70:30 bis 30:70 beträgt,
R₃ ein CH₃- oder C₄H₉-Rest,
z eine ganze Zahl von 25 bis 50
und
X₁ NH und/oder O sind.

4. Eine Polymermischung gemäß einem der Ansprüche 1 bis 3, **dadurch gekennzeichnet, dass** das ethylenisch, ungesättigte Monomere wenigstens ein Monomeres ausgewählt aus der Gruppe umfassend (Methyl)acrylsäurederivate, vorzugsweise Alkyl(meth)acrylate, Aryl(meth)acrylate und Maleinsäurediester, vorzugsweise Maleinsäuredialkylester ist.

5. Eine Polymermischung nach einem der Ansprüche 1 bis 4, **dadurch gekennzeichnet, dass** das Gewichtsverhältnis des Kammcopolymeren I zu dem Copolymeren II im Bereich von 50:50 bis 95:5 liegt.

6. Eine Polymermischung gemäß einem der Ansprüche 1 bis 5, **dadurch gekennzeichnet, dass** das Copolymere 11 aus ggf. substituiertem Styrol- und Maleinsäureanhydrid-Einheiten durch Hydrolyse der Anhydridgruppen und Versalzung erhältlich ist.

7. Eine Polymermischung nach einem der Ansprüche 1 bis 8, **dadurch gekennzeichnet, dass** die Versalzung der freien Carboxylgruppen mit wenigstens einer eine Aminogruppen aufweisenden Verbindung erfolgt.

8. Eine Polymermischung nach einem der Ansprüche 1 bis 7, erhältlich durch Mischung des Kammcopolymeren I mit dem Copolymeren II.

9. Verwendung einer Polymermischung gemäß einem der Ansprüche 1 bis 8 als Netz- und Dispergiermittel.

10. Verwendung nach Anspruch 9 für Feststoffe, vorzugsweise Pigmente und/oder Füllstoffe.

11. Verwendung nach Anspruch 9 oder 10 bei der Herstellung und/oder Verarbeitung von Feststoffkonzentraten, vorzugsweise Pigmentkonzentraten oder Pasten.

12. Verwendung nach einem der Ansprüche 9 bis 11 bei der Herstellung und/oder Verarbeitung von Lacken, Druckfarben, Tinten für inkjet-Verfahren, Papierstrich. Leder- und/oder Textilfarben, Keramiken, kosmetische Zubereitungen.

13. Verwendung nach einem der Ansprüche 9 bis 12, **dadurch gekennzeichnet, dass** übliche Hilfsstoffe, vorzugsweise übliche Bindemittel, mitverwendet werden.

14. Lacke oder Pasten enthaltend eine Polymermischung nach einem der Ansprüche 1 bis 8 als Netz- und Dispergiermittel, wenigstens einen Feststoff, vorzugsweise ein Pigment, gegebenenfalls ein wässriges Medium, gegebenenfalls wenigstens ein Bindemittel.

15. Ein Pigment, dessen Oberfläche mit einer Polymermischung nach einem der Ansprüche 1 bis 8 modifiziert ist.

## Claims

1. A polymer blend comprising
I. at least one comb copolymer containing
a) at least one block of a copolymer comprising the following structural units I to IV, with X₁ denoting NH,
and/or
b) at least one block of a copolymer comprising the following structural units I, II and IV, with X₁ denoting O,
and/or
c) at least one block of a copolymer comprising the following structural units I to IV, with X₁ denoting NH or O
and/or
d) at least one block of a copolymer of structural unit I and polymerised units of at least one ethylenically unsaturated monomer, which are different from structural units II to IV,
whereby one block d) being combined with only one block of the blocks a)-c) to yield a block copolymer and
structural units I to IV denoting 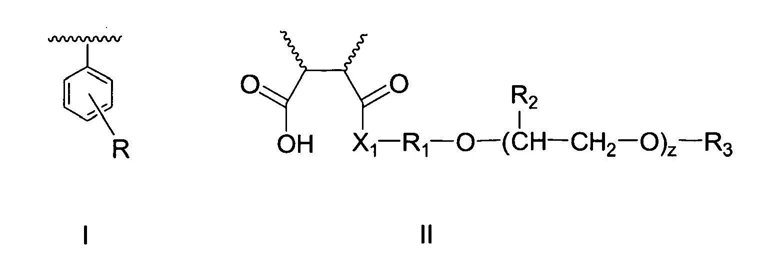 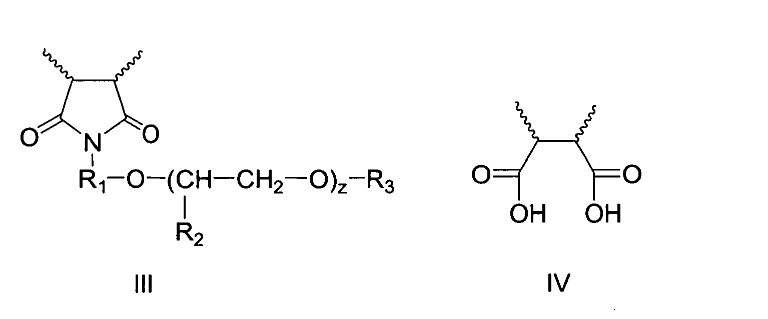 in which 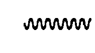
denotes the chain linkage,
R denotes H, halogen, preferably chlorine, a nitro group, an alkyl group with 1 to 15 C atoms or an aryl group with 6 to 18 C atoms,
R₁ denotes an alkylene group with 1 to 24 C atoms or a substituted or unsubstituted arylene group with 6 to 18 C atoms,
R₂ denotes H and/or an alkyl group,
z denotes an integer from 3 to 70,
X₁ denotes NH and/or O,
R₃ denotes an optionally substituted alkyl group with 1 to 30 C atoms, which may be single- or multipleunsaturated, an optionally substituted aryl group with 6 to 18 C atoms, an optionally substituted cycloalkyl group with 4 to 10 C atoms,
and the free carboxyl groups of structural unit IV may be present as alkali metal, alkaline earth metal or ammonium salts,
and
II. at least one copolymer based on structural unit I and structural unit IV, the carboxyl groups of which are present at least in part as alkaline earth metal, ammonium or alkali metal salts.

2. A polymer blend according to claim 1, **characterised in that** in structural units I to IV
R is H,
R₁ is an alkylene group with 1 to 6 C atoms,
R₂ is H or CH₃, the molar ratio of ethylene oxide units to propylene oxide units in structural unit II and structural unit III being in the range from 0:100 to 100:0,
R₃ is an alkyl group with 1 to 8 C atoms or an optionally substituted aryl group with 6 C atoms,
X₁ is NH and/or O
and
z is an integer from 5 to 60.

3. A polymer blend according to claim 1, **characterised in that** in structural units I to IV
R is H,
R₁ is an ethylene, propylene and/or isopropylene residue,
R₂ is H or a CH₃ residue, the molar ratio of ethylene oxide units to propylene oxide units amounting to 70:30 to 30:70,
R₃ is a CH₃ or C₄H₉ residue,
z is an integer from 25 to 50
and
X₁ is NH and/or O.

4. A polymer blend according to any one of claims 1 to 3, **characterised in that** the ethylenically unsaturated monomer is at least one monomer selected from the group comprising (methyl)acrylic acid derivatives, preferably alkyl (meth)acrylates, aryl (meth)acrylates and maleic acid diesters, preferably maleic acid dialkyl esters.

5. A polymer blend according to any one of claims 1 to 4, **characterised in that** the weight ratio of comb copolymer I to copolymer II is in the range from 50:50 to 95:5.

6. A polymer blend according to any one of claims 1 to 5, **characterised in that** copolymer II is obtainable from optionally substituted styrene and maleic anhydride units by hydrolysis of the anhydride groups and salification.

7. A polymer blend according to any one of claims 1 to 8, **characterised in that** salification of the free carboxyl groups proceeds with at least one compound comprising amino groups.

8. A polymer blend according to any one of claims 1 to 7, obtainable by blending comb copolymer I with copolymer II.

9. Use of a polymer blend according to any one of claims 1 to 8 as a wetting agent and dispersant.

10. Use according to claim 9 for solids, preferably pigments and/or fillers.

11. Use according to claim 9 or claim 10 in the production and/or processing of solids concentrates, preferably pigment concentrates or pastes.

12. Use according to any one of claims 9 to 11 in the production and/or processing of coating materials, printing inks, inks for inkjet methods, paper coatings, leather and/or textile dyes, ceramics, cosmetic preparations.

13. Use according to any one of claims 9 to 12, **characterised in that** conventional auxiliary substances, preferably conventional binders, are also used.

14. Coating materials or pastes containing a polymer blend according to any one of claims 1 to 8 as wetting agent and dispersant, at least one solid, preferably a pigment, optionally an aqueous medium, optionally at least one binder.

15. A pigment, the surface of which is modified with a polymer blend according to any one of claims 1 to 8.

## Revendications

1. Mélange de polymères, comprenant
1. au moins un copolymère en peigne contenant
a) au moins une séquence d'un copolymère à partir des motifs structurels suivants I à IV, X₁ représentant NH,
et/ou
b) au moins une séquence d'un copolymère à partir des motifs structurels suivants I, II et IV, X₁ représentant O,
et/ou
c) au moins une séquence d'un copolymère à partir des motifs structurels suivants I à IV, X₁ représentant NH ou O,
et/ou
d) au moins une séquence d'un copolymère à partir du motif structurel I et de motifs polymérisés d'au moins un monomère éthyléniquement insaturé qui sont différents des motifs structurels II à IV,
une séquence d) n'étant combinée qu'avec une des séquences a) - c) pour former un copolymère séquence et
les motifs structurels I à IV ayant pour formule 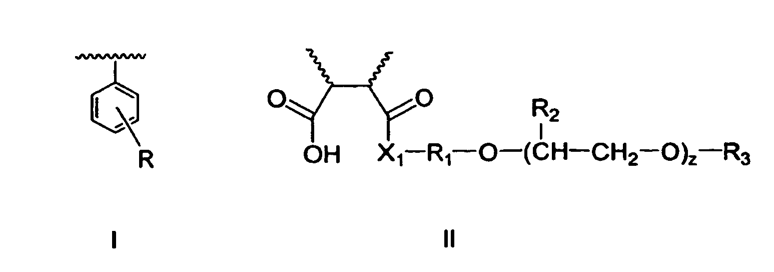 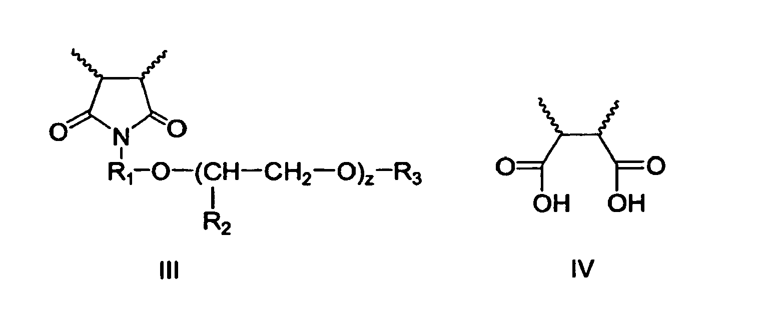 où 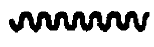 représente la caténation,
R représente H, halogène, de préférence le chlore, un groupe nitro, un groupe alkyle avec 1 à 15 atomes C ou un groupe aryle avec 6 à 18 atomes C,
R₁ représente un groupe alkylène avec 1 à 24 atomes C ou un groupe arylène substitué ou non substitué avec 6 à 18 atomes C,
R₂ représente H et/ou un groupe alkyle,
z représente un nombre entier de 3 à 70,
X₁ représente NH et/ou O,
R₃ représente un groupe alkyle éventuellement substitué avec 1 à 30 atomes C, qui peut être insaturé de façon unique ou multiple, un groupe aryle éventuellement substitué, avec 6 à 18 atomes C, un groupe cycloalkyle éventuellement substitué avec 4 à 10 atomes C,
et où les groupes carboxyle libres du motif structurel IV peuvent être présents sous forme de sels de métal alcalin, de métal alcalino-terreux ou d'ammonium,
et
II. au moins un copolymère basé sur le motif structurel I et le motif structurel IV, dont les groupes carboxyle sont présents au moins partiellement sous la forme de sels de métal alcalino-terreux, d'ammonium ou de métal alcalin.

2. Mélange de polymères selon la revendication 1, **caractérisé en ce que**, dans les motifs structurels I à IV,
R est H,
R₁ est un groupe alkylène avec 1 à 6 atomes C,
R₂ est H ou CH₃,
le rapport molaire entre les motifs oxyde d'éthylène et les motifs oxyde de propylène dans le motif structurel II et dans le motif structurel III étant compris entre 0:100 et 100:0,
R₃ est un groupe alkyle avec 1 à 8 atomes C, ou un groupe aryle éventuellement substitué avec 6 atomes C,
X₁ est NH et/ou O,
et
z est un nombre entier de 5 à 60.

3. Mélange de polymères selon la revendication 1, **caractérisé en ce que**, dans les motifs structurels I à IV,
R est H,
R₁ est un reste d'éthylène, de propylène et/ou d'isopropylène,
R₂ est H ou un reste de CH₃,
le rapport molaire entre les motifs oxyde d'éthylène et les motifs oxyde de propylène étant compris entre 70:30 et 30:70,
R₃ est un reste de CH₃ ou de C₄H₉,
z est un nombre entier de 25 à 50
et
X₁ est NH et/ou O.

4. Mélange de polymères selon l'une des revendications 1 à 3, **caractérisé en ce que** le monomère éthyléniquement insaturé est un monomère sélectionné dans le groupe comprenant
des dérivés d'acide (méthyl)acrylique, de préférence des (méth)acrylates d'alkyle, des (méth)acrylates d'aryle et des diesters d'acide malique, de préférence des dialkylesters d'acide malique.

5. Mélange de polymères selon l'une des revendications 1 à 4, **caractérisé en ce que** le rapport de poids entre le copolymère en peigne I et le copolymère II s'inscrit dans la plage de 50:50 à 95:5.

6. Mélange de polymères selon l'une des revendications 1 à 5, **caractérisé en ce que** le copolymère II peut être obtenu à partir de motifs éventuellement substitués de styrène et d'anhydride d'acide malique par hydrolyse des groupes anhydride et par salinisation.

7. Mélange de polymères selon l'une des revendications 1 à 8, **caractérisé en ce que** la salinisation des groupes carboxyle libres s'effectue avec au moins un composé présentant un groupe amino.

8. Mélange de polymères selon l'une des revendications 1 à 7, pouvant être obtenu par mélange du copolymère en peigne I avec le copolymère II.

9. Utilisation d'un mélange de polymères selon l'une des revendications 1 à 8 en tant qu'agent mouillant et dispersant.

10. Utilisation selon la revendication 9 pour des matières solides, de préférence des pigments et/ou des matières de remplissage.

11. Utilisation selon la revendication 9 ou 10 lors de la fabrication et/ou du traitement de concentrés de matières solides, de préférence des concentrés de pigment ou des pâtes.

12. Utilisation selon l'une des revendications 9 à 11 lors de la fabrication et/ou du traitement de vernis, d'encres d'imprimerie, d'encres pour les procédés de jet d'encre, de couchage de papier, d'encres pour cuir et/ou textile, de céramiques, de préparations cosmétiques.

13. Utilisation selon l'une des revendications 9 à 12, **caractérisé en ce que** des matières accessoires usuelles, de préférence des liants usuels, sont utilisées de façon associée.

14. Vernis ou pâtes contenant un mélange de polymères selon l'une des revendications 1 à 8 en tant qu'agent mouillant et dispersant, au moins une matière solide, de préférence un pigment, éventuellement un milieu aqueux, éventuellement au moins un liant.

15. Pigment dont la surface est modifiée avec un mélange de polymères selon l'une des revendications 1 à 8.
